# EUROPEAN PATENT SPECIFICATION

(11) **EP 3 074 500 B1**
(45) Date of publication and mention of the grant of the patent: **29.07.2020**
(21) Application number: 14863436.3
(22) Date of filing: 14.11.2014
(51) Int. Cl.: C09K 5/04

(54) **HEAT TRANSFER COMPOSITION CONSISTING OF DIFLUOROMETHANE, PENTAFLUOROETHANE, 1,1,2,2-TETRAFLUOROETHANE AND 1,3,3,3-TETRAFLUOROPROPENE**
WÄRMEÜBERTRAGUNGSZUSAMMENSETZUNG BESTEHEND AUS DIFLUORMETHAN, PENTAFLUORETHAN, 1,1,2,2-TETRAFLUORETHAN UND 1,3,3,3-TETRAFLUORPROPEN
COMPOSITION DE TRANSFERT DE CHALEUR CONSISTANT EN DIFLUOROMETHANE, PENTAFLUOROETHANE, 1,1,2,2-TETRAFLUOROETHANE ET 1,3,3,3-TETRAFLUOROPROPÈNE

(30) Priority: 25.11.2013 US 201361908276 P
(43) Date of publication of application: 05.10.2016
(73) Proprietor: Arkema, Inc., King of Prussia, PA 19406 (US)
(72) Inventor: VAN HORN, Brett L., King of Prussia, Pennsylvania 19406 (US)
(74) Representative: Dang, Doris
(86) International application number: PCT/US2014/065610
(87) International publication number: WO 2015/077134

(56) References cited:
- WO-A1-2013/122892
- WO-A1-2013/192069
- US-A1- 2013 055 738
- US-A1- 2013 096 218
- US-A1- 2013 096 218
- US-A1- 2013 193 369

## Description

### Field of the Invention

The present invention relates to heat transfer compositions consisting of 1,3,3,3-tetrafluoropropene, difluoromethane, pentafluoroethane, and 1,1,2,2-tetrafluoroethane for use in refrigeration, air-conditioning, heat pump systems, chillers, and other heat transfer applications. The inventive heat transfer compositions can possess reduced global warming potential while providing good capacity and performance.

### Background of Invention

With continued regulatory pressure there is a growing need to identify more environmentally sustainable replacements for refrigerants, heat transfer fluids, foam blowing agents, solvents, and aerosols with lower ozone depleting and global warming potentials. Chlorofluorocarbon (CFC) and hydrochlorofluorocarbons (HCFC), widely used for these applications, are ozone depleting substances and are being phased out in accordance with guidelines of the Montreal Protocol. Hydrofluorocarbons (HFC) are a leading replacement for CFCs and HCFCs in many applications. Though they are deemed "friendly" to the ozone layer they still generally possess high global warming potentials.

For instance several HFC-based refrigerants have been developed to replace R-22, an HCFC refrigerant with ozone depletion potential (ODP). These include R-404A, R-407C, R-407A, R-417A, R-422D, R-427A, R-438A, and others. However, most of the HFC-based R-22 replacements have higher global warming potential (GWP) than R-22 while also compromising in performance characteristics. For example, R-404A and R-407A may have slightly higher refrigeration capacity (CAP) than R-22 under some conditions but have lower performance (COP); R-407C has slightly lower GWP but also lower CAP and COP in refrigeration applications; many other R-22 replacements have not only a higher GWP but lower CAP and COP. Figure 3 shows a comparison of the GWP of R-22 and several R-22 replacements.

Another limitation is that most HFCs lack the miscibility with traditional lubricants, such as mineral oils, necessary to provide adequate performance. This has resulted in the implementation of oxygenated lubricants such as polyol ester (POE) oils, polyalkylene glycol (PAG) oils, and polyvinyl ether (PVE) oils in place of mineral oils. These new lubricants can be considerably more expensive than traditional mineral oil lubricants and can be extremely hygroscopic.

Several refrigerant compositions, such as R-422D and R-438A, have been developed incorporating a small fraction of low boiling hydrocarbons, such as butanes, propanes, or pentanes, for the purposes of improving miscibility with mineral oil and thereby improving oil return. However, it has been recognized that the quantity of hydrocarbon in the refrigerant composition must be minimized to reduce the flammability of the refrigerant composition for the interest of safety, such as taught in US 6,655,160 and US 5,688,432.

Among the HFC products designed to replace R-22, R-407C has in particular been developed for replacing R-22 in air conditioning applications. This product is a mixture combining R-32, R-125 and R-134a in the proportions of 23/25/52% by weight. R-32 denotes difluoromethane, R-125 denotes pentafluoroethane, and R-134a denotes 1,1,1,2-tetrafluoroethane. R-407C has thermodynamic properties which are very similar to those of R-22. For this reason, R-407C can be used in old systems designed to operate with R-22, thus making it possible to replace an HCFC fluid by an HFC fluid which is safer with regards to the stratospheric ozone layer in the context of a procedure for converting these old systems. The thermodynamic properties concerned are well known to a person skilled in the art and are in particular the refrigerating capacity, the coefficient of performance (or COP) and the condensation pressure.

Other products designed to replace R-22, R-407C and the like include the ombination of difluoromethane (R-32), pentafluoroethane (R-125), 2,3,3,3-tetrafluoropropene (R-1234yf), and 1,1,1,2-tetrafluoroethane (R-134a) disclosed in US Patent Application Publication No. 2013/0096218.

The refrigerating capacity represents the refrigeration power available by virtue of the refrigerant, for a given compressor. In order to replace R-22, it is essential to have available a fluid having a high refrigerating capacity close to that of R-22.

The COP expresses the ratio of the refrigerating energy delivered to the energy applied to the compressor in order to compress the refrigerant in the vapor state. In the context of the substitution of R-22, a COP value of the refrigerant which is less than that of R-22 is suitable, if an increase in the consumption of electricity of the plant is accepted.

Finally, the condensation pressure indicates the stress exerted by the refrigerant on the corresponding mechanical parts of the refrigerating circuit. A refrigerant capable of replacing R-22 in a refrigeration system designed for the latter must not exhibit a condensation pressure significantly greater than that of R-22.

In the present invention, heat transfer compositions were discovered that not only have a low GWP but have an unexpectedly good balance between capacity and performance. Preferably, the heat transfer compositions of the present invention have low flammability, more preferably the heat transfer compositions of the present invention are non-flammable, even more preferably the heat transfer compositions of the present invention are non-flammable and remain non-flammable following various leak scenarios, and even more preferably non-flammable according to ASHRAE SSPC 34. Another embodiment of the present invention are refrigerant compositions with improved oil-return characteristics in heat transfer equipment compared to the HFC refrigerants, including those incorporating small amounts of hydrocarbons such as R-422D. Though not meant to limit the scope of this invention in any way, the heat transfer compositions of the present invention are useful in new refrigeration, air conditioning, heat pump, chiller, or other heat transfer equipment; in another embodiment, the heat transfer compositions of the present invention are useful as retrofits for refrigerants in existing equipment including, but not limited to, R-22, R-407C, R-427A, R-404A, R-507, R-407A, R-407F, R-417A, R-422D, and others.

### Detailed Description of Invention

With continued regulatory pressure there is a growing need to identify more environmentally sustainable replacements for refrigerants, heat transfer fluids, foam blowing agents, solvents, and aerosols with lower ozone depleting and global warming potentials. Chlorofluorocarbon (CFC) and hydrochlorofluorocarbons (HCFC), widely used for these applications, are ozone depleting substances and are being phased out in accordance with guidelines of the Montreal Protocol. Hydrofluorocarbons (HFC) are a leading replacement for CFCs and HCFCs in many applications; though they are deemed "friendly" to the ozone layer they still generally possess high global warming potentials. One new class of compounds that has been identified to replace ozone depleting or high global warming substances are halogenated olefins, such as hydrofluoroolefins (HFO) and hydrochlorofluoroolefins (HCFO).

The heat transfer compositions of the present invention are constituted of difluoromethane (HFC-32 or R-32), pentafluoroethane (HFC-125 or R-125), 1,3,3,3-tetrafluoropropene (HFO-1234ze or R-1234ze), and 1,1,2,2-tetrafluoroethane (HFC-134 or R-134). HFO-1234ze can be the cis-isomer, trans-isomer, or mixtures thereof; in a highly preferred embodiment of the present invention the HFO-1234ze is the trans-isomer (HFO-1234ze(E) or R-1234ze(E)).

In an embodiment of the present invention, the heat transfer are consisting of from about 1% to 97% R-32, from about 1% to 97% R-125, from about 1% to 97% R-1234ze, and from about 1% to 97% R-134 by weight.

In another embodiment of the present invention, the heat transfer composition of the present invention comprises from about 1% to 97% by weight of R-32; preferably from about 5% to 40% by weight of R-32; more preferably from about 15% to 35% by weight of R-32, more preferably from 20% to 30% by weight of R-32. In another embodiment of the present invention, the heat transfer composition of the present invention comprises from about 22% to 25% by weight of R-32. In another embodiment of the present invention, the heat transfer composition of the present invention comprises from about 1% to 97% by weight of R-125; preferably from about 5% to 40% by weight of R-125; more preferably from about 15% to 35% by weight of R-125; more preferably from 20% to 30% by weight of R-125. In another embodiment of the present invention, the heat transfer composition of the present invention comprises from about 21% to 25% by weight of R-125. In another embodiment of the present invention, the heat transfer composition of the present invention comprises from about 1% to 97% by weight of R-1234ze; preferably from about 10% to 60% by weight of R-1234ze; more preferably from about 15% to 50% by weight of R-1234ze. In another embodiment of the present invention, the heat transfer composition of the present invention comprises from about 20% to 30% by weight of R-1234ze. In another embodiment of the present invention, the heat transfer composition of the present invention comprises from about 1% to 97% by weight of R-134; preferably from about 5% to 60% by weight of R-134; more preferably from about 5% to 40% by weight of R-134. In another embodiment of the present invention, the heat transfer composition of the present invention comprises from about 15% to 30% by weight of R-134.

In an embodiment of the present invention, the heat transfer compositions comprise from 2% to 98% by weight of the combined total of R-134 and R-1234ze; preferably from 10% to 90% by weight of the combined total of R-134 and R-1234ze; more preferably from 25% to 75% by weight of the combined total of R-134 and R-1234ze. In one embodiment of the present invention the heat transfer compositions comprise from 30% to 60% by weight of the combined total of R-134 and R-1234ze. In one embodiment of the present invention the heat transfer compositions comprise from 40% to 60% by weight of the combined total of R-134 and R-1234ze.

In an embodiment of the present invention, the heat transfer compositions comprise from 2% to 98% by weight of the combined total of R-32 and R-125; preferably from 10% to 90% by weight of the combined total of R-32 and R-125; more preferably from 25% to 75% by weight of the combined total of R-32 and R-125. In one embodiment of the present invention the heat transfer compositions comprise from 40% to 60% by weight of the combined total of R-32 and R-125.

In an embodiment of the present invention, the heat transfer compositions comprise R-134 and R-1234ze in a ratio of R-134:R-1234ze of from 2:98 to 98:2; preferably 10:90 to 90:10; more preferably 15:85 to 75:25. In an embodiment of the present invention, the heat transfer compositions comprise R-134 and R-1234ze in a ratio of R-134:R-1234ze of from 20:80 to 30:70. In another embodiment of the present invention, the heat transfer compositions comprise R-134 and R-1234ze in a ratio of R-134:R-1234ze of from 55:45 to 70:30.

In an embodiment of the present invention, the heat transfer compositions comprise R-32 and R-125 in a ratio of R-32:R-125 of from 2:98 to 98:2; preferably 10:90 to 80:20; more preferably 30:70 to 70:30. In an embodiment of the present invention, the heat transfer compositions comprise R-32 and R-125 in a ratio of R-32:R-125 of from 40:60 to 60:40.

In another embodiment of the present invention are heat transfer compositions where the combined total quantity of R-32 and R125 is from about 40% to 60% by weight and the combined total quantity of R-134 and R-1234ze is from about 40% to 60% by weight.

In another embodiment of the present invention are heat transfer compositions consisting from about 15% to 35% by weight of R-32, from about 15% to 35% by weight of R-125, from about 10% to 35% by weight of R-1234ze, and from about 10% to about 35% by weight of R-134.

The heat transfer compositions of the present invention may be used in combination with other refrigerants including, but not limited to, hydrofluorocarbons, hydrochlorofluorocarbons, hydrofluoroolefins, hydrofluorochlorocarbons, hydrocarbons, hydrofluoroethers, fluoroketones, chlorofluorocarbons, trans-1,2-dichloroethylene, carbon dioxide, ammonia, dimethyl ether, propylene, and mixtures thereof.

Exemplary hydrofluorocarbons (HFCs) include difluoromethane (HFC-32); 1-fluoroethane (HFC-161); 1,1-difluoroethane (HFC-152a); 1,2-difluoroethane (HFC-152); 1,1,1-trifluoroethane (HFC-143a); 1,1,2-trifluoroethane (HFC-143); 1,1,1,2-tetrafluoroethane (HFC-134a); 1,1,2,2-tetrafluoroethane (HFC-134); 1,1,1,2,2-pentafluoroethane (HFC-125); 1,1,1,3,3-pentafluoropropane (HFC-245fa); 1,1,2,2,3-pentafluoropropane (HFC-245ca); 1,1,1,2,3-pentafluoropropane (HFC-245eb); 1,1,1,3,3,3-hexafluoropropane (HFC-236fa); 1,1,1,2,3,3,3-heptafluoropropane (HFC-227ea); 1,1,1,3,3-pentafluorobutane (HFC-365mfc), 1,1,1,2,3,4,4,5,5,5-decafluoropropane (HFC-4310), and mixtures thereof. Preferred hydrofluorocarbons include HFC-134a, HFC-32, HFC-152a, HFC-125, and mixtures thereof.

Exemplary hydrofluoroolefins (HFOs) include 3,3,3-trifluoropropene (HFO-1234zf), 1,3,3,3-tetrafluoropropene (HFO-1234ze), particularly the E-isomer, 2,3,3,3-tetrafluoropropene (HFO-1234yf), 1,2,3,3,3-pentafluoropropene (HFO-1255ye), particularly the Z-isomer, E-1,1,1,3,3,3-hexafluorobut-2-ene (E-HFO-1336mzz), Z-1,1,1,3,3,3-hexafluorobut-2-ene (Z-HFO-1336mzz), 1,1,1,4,4,5,5,5-octafluoropent-2-ene (HFO-1438mzz) and mixtures thereof. Preferred hydrofluoroolefins include 3,3,3-trifluorpropene (HFO-1234zf), E-1,3,3,3-tetrafluoropropene (HFO-1234ze), 2,3,3,3-tetrafluoropropene (HFO-1234yf), and mixtures thereof.

Exemplary hydrochlorofluoroolefins (HCFOs) include 1-chloro-3,3,3-trifluoropropene (HCFO-1233zd), particularly the trans-isomer, 2-chloro-3,3,3-trifluoropropene (HCFO-1233xf), and dichloro-tetrafluoropropenes, such as isomers of HCFO-1214.

Exemplary hydrocarbons (HCs) include propylene, propane, butane, isobutane, n-pentane, iso-pentane, neo-pentane, cyclopentane, and mixtures thereof. Preferred hydrocarbons include propylene, propane, butane, and iso-butane.

Exemplary hydrochlorofluorocarbons (HCFCs) include chlorodifluoromethane (HCFC-22), 1-chloro-1,1-difluoroethane (HCFC-142b), 1,1-dichloro-1-fluoroethane (HCFC-141b), 1,1-dichloro-2,2,2-trifluoroethane (HCFC-123), and 1-chloro-1,2,2,2-tetrafluoroethane (HCFC-124).

Exemplary chlorofluorocarbons (CFCs) include trichlorofluoromethane (R-11), dichlorodifluoromethane (R-12), 1,1,2-trifluoro-1,2,2-trifluoroethane (R-113), 1,2-dichloro-1,1,2,2-tetrafluoroethane (R-114), chloro-pentafluoroethane (R-115) and mixtures thereof.

Exemplary hydrofluoroethers (HFEs) include 1,1,1,2,2,3,3-heptafluoro-3-methoxy-propane, 1,1,1,2,2,3,3,4,4-nonafluoro-4-methoxy-butane and mixtures thereof.

An exemplary fluoroketone is 1,1,1,2,2,4,5,5,5-nonafluoro-4(trifluoromethyl)-3-pentanone.

Flammability is an important property for many applications where it is very important or essential for the composition to be non-flammable, including particularly refrigerant and heat transfer applications. There are various methods of measuring the flammability of compounds and compositions, such as by measuring flash point or by ASTM E 681-01 as specified by ASHRAE Addendum 34p-92, as applicable. Preferably, the non-flammable compositions are non-flammable at ambient temperature and lower, preferably are non-flammable at 60°C and lower, and even more preferably are non-flammable at 100°C and lower. A greater range for non-flammability is beneficial by providing a greater degree of safety during use, handling, or transport.

In a preferred embodiment of the present invention, the heat transfer compositions of the present invention are non-flammable. Preferably, the heat transfer composition of the present invention is non-flammable and remains non-flammable upon fractionation between a liquid and vapor phase. For example, in a 50% leak test a vessel is charged with an initial composition, which is preferably non-flammable. The vessel can be maintained at a desired temperature, such as -25°C or 25°C, and the initial vapor phase composition is measured, and is preferably non-flammable. The composition is allowed to leak from the vessel at constant temperature and set leak rate until 50% by weight of the initial composition is removed, at which time the final vapor phase composition is measured, and is preferably non-flammable.

In a preferred embodiment of the present invention, the heat transfer compositions of the present invention exhibit minimal change in composition or vapor pressure following a leak of the heat transfer composition from a vessel or equipment. In one such leak case, the heat transfer composition of the present invention is charged to a vessel and maintained at constant temperature. The heat transfer composition is permitted to leak from the vessel at a slow rate until 50% by weight of the overall composition has escaped the vessel. In a preferred embodiment of the present invention, the vapor pressure of the heat transfer composition will not have significantly changed following the 50% leak; preferably the vapor pressure has changed less than 20%, more preferably less than 10%, more preferably less than 5%, and even more preferably less than 2%. In another embodiment of the present invention, the vapor and liquid phases in the vessel following the 50% leak are non-flammable.

Though not meant to limit the scope of the present invention in any way, examples of heat transfer compositions of the present invention for use as replacements for R-22, R-407C, R-404A, and/or R-507 are shown in Table 1. It is understood that slight variations in the compositions should be considered as being within the scope of the present invention; including, but not limited to, compositions within +/- 2wt%, preferably within +/- 1 wt%.

**Table 1:**

| R-32 (wt%) | R-125 (wt%) | R-134 (wt%) | R-1234ze (wt%) | GWP (wt%) |
|---|---|---|---|---|
| 20 | 15 | 20 | 45 | 883 |
| 20 | 15 | 30 | 35 | 992 |
| 20 | 15 | 35 | 30 | 1047 |
| 20 | 17 | 15 | 48 | 898 |
| 20 | 20 | 10 | 50 | 948 |
| 20 | 20 | 15 | 45 | 1003 |
| 20 | 20 | 20 | 40 | 1057 |
| 20 | 20 | 25 | 35 | 1112 |
| 20 | 20 | 30 | 30 | 1167 |
| 20 | 20 | 35 | 25 | 1222 |
| 23 | 19 | 12 | 46 | 955 |
| 23 | 22 | 12 | 43 | 1060 |
| 23 | 22 | 15 | 40 | 1093 |
| 23 | 22 | 20 | 35 | 1147 |
| 23 | 22 | 25 | 30 | 1202 |
| 23 | 22 | 30 | 25 | 1257 |
| 23 | 25 | 15 | 37 | 1197 |
| 25 | 21 | 11 | 43 | 1027 |
| 25 | 20 | 15 | 40 | 1036 |
| 25 | 20 | 20 | 35 | 1091 |
| 25 | 25 | 10 | 40 | 1156 |
| 25 | 25 | 12 | 38 | 1178 |
| 25 | 25 | 15 | 35 | 1211 |
| 25 | 25 | 20 | 30 | 1266 |
| 25 | 25 | 25 | 25 | 1320 |
| 25 | 25 | 30 | 20 | 1375 |
| 25 | 25 | 35 | 15 | 1430 |
| 25 | 30 | 5 | 40 | 1276 |
| 25 | 30 | 10 | 35 | 1331 |
| 25 | 30 | 15 | 30 | 1386 |
| 25 | 30 | 20 | 25 | 1440 |
| 25 | 30 | 25 | 20 | 1495 |
| 25 | 30 | 27 | 18 | 1517 |
| 25 | 30 | 30 | 15 | 1550 |
| 30 | 30 | 10 | 30 | 1364 |
| 30 | 30 | 15 | 25 | 1419 |
| 30 | 30 | 20 | 20 | 1474 |
| 30 | 30 | 25 | 15 | 1528 |
| 30 | 30 | 30 | 10 | 1583 |
| 30 | 27 | 10 | 33 | 1259 |
| 30 | 27 | 15 | 28 | 1314 |
| 30 | 27 | 20 | 23 | 1369 |
| 35 | 33 | 12 | 20 | 1524 |
| 35 | 33 | 19 | 13 | 1601 |

Examples of heat transfer compositions further comprising R-134a, R-1234yf, and mixtures for use as replacements for R-22, R-407C, R-404A, and/or R-507 are shown in Table 2. It is understood that slight variations in the compositions should be considered as being within the scope of the present invention; including, but not limited to, compositions within +/- 2wt%, preferably within +/- 1 wt%..

**Table 2:**

| R-32 (wt%) | R-125 (wt%) | R-134 (wt%) | R-1234ze (wt%) | R-1234yf (wt%) | R-134a (wt%) | GWP (wt%) |
|---|---|---|---|---|---|---|
| 20 | 20 | 25 | 25 | 5 | 5 | 1183 |
| 20 | 20 | 30 | 25 | 5 | 0 | 1167 |
| 20 | 20 | 25 | 30 | 0 | 5 | 1183 |
| 25 | 25 | 20 | 25 | 5 | 0 | 1265 |
| 25 | 25 | 20 | 25 | 0 | 5 | 1337 |
| 25 | 25 | 20 | 20 | 5 | 5 | 1337 |
| 30 | 27 | 10 | 23 | 5 | 5 | 1331 |
| 30 | 27 | 10 | 13 | 10 | 10 | 1402 |
| 25 | 25 | 20 | 26 | 2 | 2 | 1294 |
| 25 | 25 | 10 | 20 | 10 | 10 | 1298 |
| 30 | 30 | 10 | 25 | 5 | 0 | 1364 |
| 30 | 30 | 10 | 20 | 5 | 5 | 1435 |
| 30 | 30 | 15 | 15 | 5 | 5 | 1490 |
| 23 | 22 | 15 | 25 | 8 | 7 | 1192 |
| 23 | 22 | 15 | 20 | 10 | 10 | 1235 |

Glide, also known as temperature glide, is the absolute value of the difference between the starting and ending temperatures of a phase-change process by a refrigerant within a component of a refrigerating system, exclusive of any subcooling or superheating. This term usually describes condensation or evaporation of a zoetrope. An embodiment of the present invention are heat transfer compositions that have a low glide; preferably where the glide is less 10°C, more preferably where the glide is less 5°C, even more preferably where the glide is less than 3°C, even more preferably where the glide is less than 2°C, and even more preferably where the glide is less than 1°C.

The global warming potential (GWP) is a relative measure of how much heat a gas traps in the atmosphere. GWP is typically expressed relative to carbon dioxide over a 100 year time period. An embodiment of the present invention are heat transfer compositions with a low GWP value, preferably where the GWP is less than 2000, more preferably less than 1800, more preferably < 1500, more preferably < 1400 and even more preferably < 1200. In another embodiment of the present invention are heat transfer compositions where the GWP is less than 1000. In another embodiment of the present invention are heat transfer compositions where the GWP is between about 800 and 1400.

An embodiment of the present invention are heat transfer compositions that when used in refrigeration, air-conditioning, chiller, or heat pump systems provide similar or better capacity, performance, or both than HFC or HCFC based refrigerants used in similar applications.

An embodiment of the present invention are heat transfer compositions that are used to replace R-22 or R-407C; the heat transfer compositions may be used to retrofit existing equipment installed with or comprising R-22 or R-407C; the heat transfer compositions may also be used in new equipment designed for R-22 or R-407C.

An embodiment of the present invention are heat transfer compositions that are used to replace R-404A or R-507; the heat transfer compositions may be used to retrofit existing equipment installed with or comprising R-404A or R-507; the heat transfer compositions may also be used in new equipment designed for R-404A or R-507.

An embodiment of the present invention are heat transfer compositions that are used to replace R-134a.

An embodiment of the present invention are heat transfer compositions that are used to replace R-407A or R-407F.

An embodiment of the present invention are heat transfer compositions that are used to replace R-410A.

In order for a new refrigerant to be used to retrofit an existing system or used a new system designed for another refrigerant, it is important that the operating properties of the new refrigerant be as close as possible to those that the equipment was designed or installed for; a benefit of this is to minimize the changes to the equipment or operating conditions when changing refrigerants, which can be difficult, time consuming, and costly. Such properties include the refrigerant mass flow rate, the refrigerant capacity, the coefficient of performance (COP), efficiency, the pressure ratio, and the discharge temperature at the desired operating conditions. For example, if the mass flow rate is significantly different when using the new refrigerant it may require changing thermal expansion valves (TXV) in the system. Example operating conditions, not meant to limit the scope of the present invention in any way, are low temperature refrigeration, medium temperature refrigeration, air-conditioning, heating, high-ambient refrigeration or air-conditioning, etc.

In an embodiment of the present invention, the mass flow rate of the heat transfer composition of the present invention is within 20%, preferably within 15%, more preferably within 10%, even more preferably within 5%, and even more preferably within 2% of the mass flow rate of R-22 when used in a refrigeration, air-conditioning, chilling, or heat pump system. In an embodiment of the present invention, the capacity of the heat transfer composition of the present invention is not less than 80%, preferably not less than 85%, more preferably not less than 90%, even more preferably not less than 95%, and even more preferably not less than 98% of the capacity of R-22 when used in a refrigeration, air-conditioning, chilling, or heat pump system. In an embodiment of the present invention, the efficiency of the system using the heat transfer composition of the present invention is not less than 80%, preferably not less than 85%, more preferably not less than 90%, even more preferably not less than 95%, and even more preferably not less than 98% of the efficiency of the system using R-22 when used in a refrigeration, air-conditioning, chilling, or heat pump system. In an embodiment of the present invention, the COP of the heat transfer composition of the present invention is not less than 80%, preferably not less than 85%, more preferably not less than 90%, even more preferably not less than 95%, and even more preferably not less than 98% of the COP of R-22 when used in a refrigeration, air-conditioning, chilling, or heat pump system. In an embodiment of the present invention, the compressor discharge temperature of the heat transfer composition of the present invention is not more than 60°F higher, preferably not less more than 50°F higher, more preferably not more than 40°F higher, even more preferably more than 30°F higher than the compressor discharge temperature of R-22 when used in a refrigeration, air-conditioning, chilling, or heat pump system; in another preferred embodiment of the present invention, the system uses liquid injection.

In an embodiment of the present invention, the mass flow rate of the heat transfer composition of the present invention is within 20%, preferably within 15%, more preferably within 10%, even more preferably within 5%, and even more preferably within 2% of the mass flow rate of R-404A when used in a refrigeration, air-conditioning, chilling, or heat pump system. In an embodiment of the present invention, the capacity of the heat transfer composition of the present invention is not less than 80%, preferably not less than 85%, more preferably not less than 90%, even more preferably not less than 95%, and even more preferably not less than 98% of the capacity of R-404A when used in a refrigeration, air-conditioning, chilling, or heat pump system. In an embodiment of the present invention, the efficiency of the system using the heat transfer composition of the present invention is not less than 80%, preferably not less than 85%, more preferably not less than 90%, even more preferably not less than 95%, and even more preferably not less than 98% of the efficiency of the system using R-404A when used in a refrigeration, air-conditioning, chilling, or heat pump system. In an embodiment of the present invention, the COP of the heat transfer composition of the present invention is not less than 80%, preferably not less than 85%, more preferably not less than 90%, even more preferably not less than 95%, and even more preferably not less than 98% of the COP of R-404A when used in a refrigeration, air-conditioning, chilling, or heat pump system. In an embodiment of the present invention, the compressor discharge temperature of the heat transfer composition of the present invention is not more than 60°F higher, preferably not less more than 50°F higher, more preferably not more than 40°F higher, even more preferably more than 30°F higher than the compressor discharge temperature of R-404A when used in a refrigeration, air-conditioning, chilling, or heat pump system; in another preferred embodiment of the present invention, the system uses liquid injection.

In an embodiment of the present invention, the mass flow rate of the heat transfer composition of the present invention is within 20%, preferably within 15%, more preferably within 10%, even more preferably within 5%, and even more preferably within 2% of the mass flow rate of R-407C when used in a refrigeration, air-conditioning, chilling, or heat pump system. In an embodiment of the present invention, the capacity of the heat transfer composition of the present invention is not less than 80%, preferably not less than 85%, more preferably not less than 90%, even more preferably not less than 95%, and even more preferably not less than 98% of the capacity of R-407C when used in a refrigeration, air-conditioning, chilling, or heat pump system. In an embodiment of the present invention, the efficiency of the system using the heat transfer composition of the present invention is not less than 80%, preferably not less than 85%, more preferably not less than 90%, even more preferably not less than 95%, and even more preferably not less than 98% of the efficiency of the system using R-407C when used in a refrigeration, air-conditioning, chilling, or heat pump system. In an embodiment of the present invention, the COP of the heat transfer composition of the present invention is not less than 80%, preferably not less than 85%, more preferably not less than 90%, even more preferably not less than 95%, and even more preferably not less than 98% of the COP of R-407C when used in a refrigeration, air-conditioning, chilling, or heat pump system. In an embodiment of the present invention, the compressor discharge temperature of the heat transfer composition of the present invention is not more than 60°F higher, preferably not less more than 50°F higher, more preferably not more than 40°F higher, even more preferably more than 30°F higher than the compressor discharge temperature of R-407C when used in a refrigeration, air-conditioning, chilling, or heat pump system; in another preferred embodiment of the present invention, the system uses liquid injection.

In an aspect of the present invention is a method of producing low temperature refrigeration using a heat transfer composition of the present invention, particularly in a system designed for R-22, R-407C, R-404A, and/or R-507, particularly R-22 and/or R-404A.

In an aspect of the present invention is a method of producing medium temperature refrigeration using a heat transfer composition of the present invention, particularly in a system designed for R-22, R-407C, R-404A, and/or R-507, particularly R-22 and/or R-404A.

In an aspect of the present invention is a method of producing air-conditioning using a heat transfer composition of the present invention, particularly in a system designed for R-22, R-407C, R-404A, and/or R-507, particularly R-22 and/or R-407C.

In an aspect of the present invention is a method of retrofitting a heat transfer system with a heat transfer composition of the present invention.

The heat transfer compositions of the present invention may be used in combination with a lubricating oil. Exemplary lubricating oils include polyol esters, polyalkylene glycols, polyglycols, polyvinyl ethers, mineral oils, alkyl benzene oil, polyalpha olefins, and mixtures thereof. Lubricating oils of the present invention range from very low to high viscosity, preferably with viscosities at 100°F from 15 to 800 cSt, and more preferably from 20 to 100 cSt. The typical refrigeration lubricating oils used in the present invention had viscosities of 15, 32, 68, and 100 cSt at 100°F.

The following is a exemplary description of polyol ester (POE) lubricating oils and is not meant to limit the scope of the present invention in any way. POE oils are typically formed by a chemical reaction (esterification) of a carboxylic acid, or mixture of carboxylic acids, with an alcohol, or mixtures of alcohols. The carboxylic acids are typically mono-functional or di-functional. The alcohols are typically mono-functional or poly-functional (polyols). The polyols are typically di-, tri-, or tetra-functional. Examples of polyols include, but are not limited to, neopentylglycol, glycerin, trimethylolpropane, pentaerythritol, and mixtures thereof. Examples of carboxylics acids include, but are not limited to, ethyl hexanoic acid, including 2-ethyl hexanoic acid, trimethyl hexanoic acid, including 3,5,5-trimethyl hexanoic acid, octanoic acid, including linear octanoic acid, pentanoic acid, including n-pentanoic acid, neo acids, including dimethylpentanoic acid, C5 to C20 carboxylic acids, and mixtures thereof. The carboxylic acids may also be derived from natural sources, including, but not limited to, plant and vegatable oils of soybean, palm, olive, rapeseed, cottonseed, coconut, palm kernal, corn, castor, sesame, jojoba, peanut, sunflower, others, and mixtures thereof. Natural oil carboxylic acids are typically C18 acids but also include C12 - C20 acids, among others. In one embodiment of the present invention, the POE oil is formulated using one or more mono-functional carboxylic acid with one or more polyol. In one embodiment of the present invention, the POE oil is forulated using one or more di-functional carboxylic acid with one or more mono-functional alcohol. In one embodiment of the present invention, the POE oil is a mixture of different POE oils. In one embodiment of the present invention, the POE oil is formulated using one or more C5 - C10 carboxylic acids.

Hydrocarbon lubricating oils of the present invention may comprise those commonly known as "mineral oils" in the field of compression refrigeration lubrication. Mineral oils comprise paraffins (i.e. straight-chain and branched-carbon-chain, saturated hydrocarbons), naphthenes (i.e. cyclic paraffins) and aromatics (i.e. unsaturated, cyclic hydrocarbons containing one or more rings characterized by alternating double bonds). Hydrocarbon lubricating oils of the present invention further comprise those commonly known as "synthetic oils" in the field of compression refrigeration lubrication. Synthetic oils comprise alkylaryls (i.e. linear and branched alkyl alkylbenzenes), synthetic paraffins and napthenes, and poly(alphaolefins).

Traditional classification of oils as paraffinic or naphthenic refers to the number of paraffinic or naphthenic molecules in the refined lubricant. Paraffinic crudes contain a higher proportion of paraffin wax, and thus have a higher viscosity index and pour point than to naphthenic crudes.

Alkylbenzene lubricating oils have alkyl side chains that are either branched or linear, with a distribution in chain lengths typically from 10 to 20 carbons, though other alkyl chain length distributions are possible. Another preferred alkylbenzene lubricating oil comprises at least one alkylbenzene of the form: (C₆H₆)-C(CH₂)(R₁)(R₂) where (C₆H₆) is a benzyl ring and R₁ and R₂ are saturated alkyl groups, preferably containing at least one isoC₃ group, more preferably from 1 to 6 isoC₃ groups. Either R₁ or R₂ may be a hydrogen atom, but preferably not both.

PAG oils can be 'un-capped', 'single-end capped', or 'double-end capped'. Examples of commercial PAG oils include, but are not limited to, ND-8, Castrol PAG 46, Castrol PAG 100, Castrol PAG 150, Daphne Hermetic PAG PL, Daphne Hermetic PAG PR.

Polyvinyl ether (PVE) oils are another type of oxygenated refrigeration oil that has been developed for use with HFC refrigerants. Commercial examples of PVE refrigeration oil include FVC32D and FVC68D produced by Idemitsu. Though not meant to limit the scope of the present invention in any way, in an embodiment of the present invention, the polyvinyl ether oil includes those taught in the literature such as described in US Patents 5,399,631 and 6,454,960. In another embodiment of the present invention, the polyvinyl ether oil is composed of structural units of the type shown by Formula 1:

Formula 1: -[C(R₁,R₂)-C(R₃,-O-R₄)]-

Where R₁, R₂, R₃, and R₄ are independently selected from hydrogen and hydrocarbons, where the hydrocarbons may optionally contain one or more ether groups. In a preferred embodiment of the present invention, R₁, R₂ and R₃ are each hydrogen, as shown in Formula 2:

Formula 2: -[CH₂-CH(-O-R₄)]-

In another embodiment of the present invention, the polyvinyl ether oil is composed of structural units of the type shown by Formula 3:

Formula 3: -[CH₂-CH(-O-R₅)]ₘ-[CH₂-CH(-O-R₆)ₙ-

Where R₅ and R₆ are independently selected from hydrogen and hydrocarbons and where m and n are integers.

The thermal/chemical stability of refrigerant/lubricant mixtures can be evaluated using various tests known to those of skill the art, such as ANSI/ASHRAE Standard 97-2007 (ASHRAE 97). In such a test, mixtures of refrigerant and lubricant, optionally in the presence of catalyst or other materials including water, air, metals, metal oxides, ceramics, etc, are typically aged at elevated temperature for a predetermined aging period. After aging the mixture is analyzed to evaluate any decomposition or degradation of the mixture. A typical composition for testing is a 50/50 wt/wt mixture of refrigerant/lubricant, though other compositions can be used. Typically, the aging conditions are at from about 140°C to 200°C for from 1 to 30 days; aging at 175°C for 14 days is very typical.

Multiple techniques are typically used to analysis the mixtures following agent. A visual inspection of the liquid fraction of the mixture for any signs of color change, precipitation, or heavies, is used to check for gross decomposition of either the refrigerant or lubricant. Visual inspection of any metal test pieces used during testing is also done to check for signs of corrosion, deposits, etc. Halide analysis is typically performed on the liquid fraction to quantify the concentration of halide ions (eg. fluoride) present. An increase in the halide concentration indicates a greater fraction of the halogenated refrigerant has degraded during aging and is a sign of decreased stability. The Total Acid Number (TAN) for the liquid fraction is typically measured to determine the acidity of the recovered liquid fraction, where an increase in acidity is a sign of decomposition of the refrigerant, lubricant, or both. GC-MS is typically performed on the vapor fraction of the sample to identify and quantify decomposition products.

The effect of water on the stability of the refrigerant/lubricant combination can be evaluated by performing the aging tests at various levels of moisture ranging from very dry (< 10 ppm water) to very wet (>10000 ppm water). Oxidative stability can be evaluated by performing the aging test either in the presence or absence of air.

The heat transfer compositions of the present invention may be used in combination with dyes, stabilizers, acid scavengers, antioxidant, viscosity modifiers, pour point depressants, corrosion inhibitors, nanoparticles, surfactants, compatibilizers, solubilizing agents, dispersing agents, fire retarding agents, flame suppressants, medicants, sterilants, polyols, polyol premix components, cosmetics, cleaners, flushing agents, anti-foaming agents, oils, odorants, tracer compounds, and mixtures thereof.

The heat transfer compositions of the present invention may be used in heat transfer systems, including for refrigeration, air conditioning, and liquid chilling. Heat transfer systems are operated with one portion of the cycle at a the lower operating temperature range and another part of the cycle at the upper operating temperature range. These upper and lower temperature ranges will depend on the specific application. For example, the operating temperatures for low temperature refrigeration may be different than for automotive air conditioning or for water chillers. Preferrably, the upper operating temperature range is from about +15°C to about +90°C, more preferrably from about +30°C to about +70°C. Preferrably, the lower operating temperature range is from about +25°C to about -60°C, more preferrably from about +15°C to about -30°C. For example, a low pressure liquid chiller may be operated at an evaporator temperature from about -10°C to +10°C and a condensor temperature from about +30°C to +55°C. For example, an air conditioner, such as for automotive AC, may operate with an evaporating temperature at 4°C and a condensing temperature of 40°C. For refrigeration, the lower operating temperature range may be depend upon the specific application. For instance, some typical application temperatures for refrigeration include: freezer (eg. ice cream): - 15°F +/- 2°F (-26°C +/- 1.1°C); low temperature: 0°F +/- 2°F (-18°C +/- 1.1°C); medium temperature: 38°F +/- 2°F (3.3°C +/- 1.1°C). These examples are only informative and not meant to limit the scope of the present invention in any way. Other operating temperatures and operating temperature ranges may be employed within the scope of the present invention.

The heat transfer compositions of the present invention are also useful in organic Rankine cycles for electricity production.

Though not meant to limit the scope of this invention in any way, the heat transfer compositions of the present invention are useful in new refrigeration, air conditioning, heat pump, or other heat transfer equipment; in another embodiment, the heat transfer compositions of the present invention are useful as retrofits for refrigerants in existing equipment including, but not limited to, R-22, R-407C, R-427A, R-404A, R-407A, R-417A, R-422D, and others. When the heat transfer compositions of the present invention are used as retrofits for other refrigerants in existing equipment, it is preferred that the operating characteristic, such as pressures, discharge temperature, mass flow rate, are similar to the operating characteristics of the refrigerant being replaced. In a higherly preferred embodiment, the heat transfer compositions of the present invention have operating characteristics that are close enough to the refrigerant being replaced to avoid the need to change make additional changes to the equipment, such as changing a thermal expansion valve (TXV).

### METHODS AND SYSTEMS

The compositions of the present invention are useful in connection with numerous methods and systems, including as heat transfer fluids in methods and systems for transferring heat, such as refrigerants used in refrigeration, air conditioning and heat pump systems. The present compositions are also advantageous for in use in systems and methods of generating aerosols, preferably comprising or consisting of the aerosol propellant in such systems and methods. Methods of forming foams and methods of extinguishing and suppressing fire are also included in certain aspects of the present invention. The present invention also provides in certain aspects methods of removing residue from articles in which the present compositions are used as solvent compositions in such methods and systems.

### HEAT TRANSFER METHODS

The preferred heat transfer methods generally comprise providing a composition of the present invention and causing heat to be transferred to or from the composition changing the phase of the composition. For example, the present methods provide cooling by absorbing heat from a fluid or article, preferably by evaporating the present refrigerant composition in the vicinity of the body or fluid to be cooled to produce vapor comprising the present composition. Preferably the methods include the further step of compressing the refrigerant vapor, usually with a compressor or similar equipment to produce vapor of the present composition at a relatively elevated pressure. Generally, the step of compressing the vapor results in the addition of heat to the vapor, thus causing an increase in the temperature of the relatively high-pressure vapor. Preferably, the present methods include removing from this relatively high temperature, high pressure vapor at least a portion of the heat added by the evaporation and compression steps. The heat removal step preferably includes condensing the high-temperature, high-pressure vapor while the vapor is in a relatively high-pressure condition to produce a relatively high-pressure liquid comprising a composition of the present invention. This relatively high-pressure liquid preferably then undergoes a nominally isoenthalpic reduction in pressure to produce a relatively low temperature, low-pressure liquid. In such embodiments, it is this reduced temperature refrigerant liquid which is then vaporized by heat transferred from the body or fluid to be cooled.

In another process embodiment of the invention, the compositions of the invention may be used in a method for producing heating which comprises condensing a refrigerant comprising the compositions in the vicinity of a liquid or body to be heated. Such methods, as mentioned hereinbefore, frequently are reverse cycles to the refrigeration cycle described above.

The heat transfer combinations of the present invention are effective working fluids in refrigeration, air-conditioning, or heat pump systems. Typical vapor-compression refrigeration, air-conditioning, or heat pump systems include an evaporator, a compressor, a condenser, and an expansion device. A vapor-compression cycle re-uses refrigerant in multiple steps producing a cooling effect in one step and a heating effect in a different step. The cycle can be described simply as follows: liquid refrigerant enters an evaporator through an expansion device, and the liquid refrigerant boils in the evaporator at a low temperature to form a gas and produce cooling. The low-pressure gas enters a compressor where the gas is compressed to raise its pressure and temperature. The higher-pressure (compressed) gaseous refrigerant then enters the condenser in which the refrigerant condenses and discharges its heat to the environment. The refrigerant returns to the expansion device through which the liquid expands from the higher-pressure level in the condenser to the low-pressure level in the evaporator, thus repeating the cycle.

The heat transfer combinations of the present invention are useful in mobile or stationary systems. Stationary air-conditioning and heat pumps include, but are not limited to chillers, high temperature heat pumps, residential and light commercial and commercial air-conditioning systems. Stationary refrigeration applications include, but are not limited to, equipment such as domestic refrigerators, ice machines, walk-in and reach-in coolers and freezers, and supermarket systems. As used herein, mobile refrigeration systems or mobile air-conditioning systems refers to any refrigeration or air-conditioning apparatus incorporated into a transportation unit for the road, rail, sea or air. The present invention is particularly useful for road transport refrigerating or air-conditioning apparatus, such as automobile air-conditioning apparatus or refrigerated road transport equipment.

Typical compressors used in refrigeration, air-conditioning, or heat pump systems are positive-displacement and dynamic compressors. Positive-displacement compressors include reciprocating compressors, such as piston compressors, orbiting compressors, such as scroll compressors, and rotary compressors, such as screw compressors. A typical dynamic compressor is a centrifugal compressor. The heat transfer compositions of the present invention can be used in heat transfer equipment employing any of these compressor types.

Refrigeration, air-conditioning, or heat pump systems may use single-staged, double-staged, or multi-staged compression. Refrigeration, air-conditioning, or heat pump systems may also be cascade systems with or without a secondary heat transfer circuit.

Heat exchangers used in the heat transfer systems may be of any type. Typical heat exchangers include parallel or co-current flow, counterflow, cross-flow. Preferably, heat exchangers used with the heat transfer compositions of the present invention are counterflow, counterflow-like, or crossflow.

In an embodiment of the present invention, the heat transfer compositions of the present invention are used in refrigeration, air-conditioning, or chilling equipment comprising and evaporator, condenser, compressor, and expansion device. Though not meant to limit the scope of this invention in any way, the system may be operated with an evaporator temperature of from -45°F to 55°F, including, but not limited to - 40°F, -35°F, -30°F, -25°F, -20°F, -15°F, -10°F, -5°F, 0°F, 5°F, 10°F, 15°F, 20°F, 25°F, 30°F, 35°F, 40°F. Though not meant to limit the scope of this invention in any way, the system may be operated with an condenser temperature of from 60°F to 150°F, including, but not limited to 60°F, 65°F, 70°F, 75°F, 80°F, 85°F, 90°F, 95°F, 100°F, 105°F, 110°F, 115°F, 120°F, 125°F, 130°F, 135°F, 140°F, 145°F, 150°F. Though not meant to limit the scope of this invention in any way, the system may be operated with varying degrees of condenser subcooling, including, but not limited to 0°F to 20°F, including but not limited to 0°F, 5°F, 10°F, and 15°F; and varying degrees of evaporator superheat, including, but not limited to 0°F to 20°F, including but not limited to 0°F, 5°F, 10°F, and 15°F. In an embodiment of the present invention, the system is operated with a mean evaporator temperature of 40°F, mean condenser temperature of 100°F, 0 to 15°F of subcooling, and 0 to 15°F of superheat, particularly 10°F of superheat. In an embodiment of the present invention, the system is operated with a mean evaporator temperature of 45°F, mean condenser temperature of 110°F, 0 to 15°F of subcooling, and 0 to 15°F of superheat, particularly 10°F of superheat. In an embodiment of the present invention, the system is operated with a mean evaporator temperature of 45°F, mean condenser temperature of 130°F, 0 to 15°F of subcooling, and 0 to 15°F of superheat, particularly 10°F of superheat. In an embodiment of the present invention, the system is operated with a mean evaporator temperature of 20°F, mean condenser temperature of 110°F, 0 to 15°F of subcooling, particularly 0°F of subcooling, and 0 to 15°F of superheat, particularly 10°F of superheat. In an embodiment of the present invention, the system is operated with a mean evaporator temperature of 0°F, mean condenser temperature of 110°F, 0 to 15°F of subcooling, particularly 0°F of subcooling, and 0 to 15°F of superheat, particularly 10°F of superheat. In an embodiment of the present invention, the system is operated with a mean evaporator temperature of -25°F, mean condenser temperature of 110°F, 0 to 15°F of subcooling, particularly 0°F of subcooling, and 0 to 15°F of superheat, particularly 10°F of superheat. In an embodiment of the present invention, the system is operated with a mean evaporator temperature of -25°F, mean condenser temperature of 105°F, 0 to 15°F of subcooling, particularly 0°F of subcooling, and 0 to 15°F of superheat, particularly 10°F of superheat. In an embodiment of the present invention, the system is operated with a mean evaporator temperature of 50°F, mean condenser temperature of 140°F, 0 to 15°F of subcooling, particularly 0°F of subcooling, and 0 to 15°F of superheat, particularly 10°F of superheat. In an embodiment of the present invention, the system is operated with a mean evaporator temperature of 20°F, mean condenser temperature of 130°F, 0 to 15°F of subcooling, particularly 0°F of subcooling, and 0 to 15°F of superheat, particularly 10°F of superheat. In an embodiment of the present invention, the system is operated with a mean evaporator temperature of 0°F, mean condenser temperature of 130°F, 0 to 15°F of subcooling, particularly 0°F of subcooling, and 0 to 15°F of superheat, particularly 10°F of superheat. In an embodiment of the present invention, the system is operated with a mean evaporator temperature of -25°F, mean condenser temperature of 130°F, 0 to 15°F of subcooling, particularly 0°F of subcooling, and 0 to 15°F of superheat, particularly 10°F of superheat.

In an embodiment of the present invention, the heat transfer compositions of the present invention are used in high ambient conditions, including, but not limited to, where the ambient temperature is above 100°F. In high ambient temperatures, the heat transfer system may be operated at elevated condenser temperature, including, but not limited to a mean condenser temperature greater than about 110°F, or greater than about 120°F, or greater than about 130°F, or greater than about 140°F.

### Examples

### Example 1: Use in Refrigeration in a R-404A System

A refrigeration system charged with R-404A is operated with a mean evaporator temperature of 0°F, mean condenser temperature of 110°F, 10°F of superheat, and 0°F of subcooling. The R-404A is removed from the system and replaced with a refrigerant of the present invention from Table 1 and then is operated under similar conditions to R-404A. The capacity and the performance when using the refrigerant of the present invention are acceptable.

### Example 2: Use in Refrigeration in a R-22 System

A refrigeration system charged with R-22 and mineral oil is operated with a mean evaporator temperature of 0°F, mean condenser temperature of 110°F, 10°F of superheat, and 0°F of subcooling. The mineral oil and R-22 are removed from the system and replaced with a POE oil and a refrigerant of the present invention from Table 1 and then is operated under similar conditions to R-22. The capacity and the performance when using the refrigerant of the present invention are acceptable.

### Example 3: Use as a Retrofit for R-22

An air-conditioning system charged with R-22 and mineral oil is operated with a mean evaporator temperature of 40°F, mean condenser temperature of 110°F, 10°F of superheat, and 10°F of subcooling. The R-22 is removed from the system and replaced with a refrigerant of the present invention from Table 1 and then is operated under similar conditions to R-22. The capacity and the performance when using the refrigerant of the present invention are acceptable.

## Claims

1. A heat transfer composition consisting of difluoromethane, pentafluoroethane, 1,1,2,2-tetrafluoroethane, and 1,3,3,3-tetrafluoropropene.

2. The heat transfer composition of claim 1 consisting of 1% to 97% difluoromethane, from 1% to 97% pentafluoroethane, from 1% to 97% 1,3,3,3-tetrafluoropropene, and from 1% to 97% 1,1,2,2-tetrafluoroethane on a weight basis.

3. The heat transfer composition of claim 1 consisting of 5% to 40% difluoromethane, from 5% to 40% pentafluoroethane, from 10% to 60% 1,3,3,3-tetrafluoropropene, and from 5% to 60% 1,1,2,2-tetrafluoroethane on a weight basis.

4. The heat transfer composition of claim 1 consisting of 15% to 35% difluoromethane, from 15% to 35% pentafluoroethane, from about 10% to 35% 1,3,3,3-tetrafluoropropene, and from about 10% to 35% 1,1,2,2-tetrafluoroethane on a weight basis.

5. The heat transfer composition of claim 1 where said 1,3,3,3-tetrafluoropropene is the trans-isomer.

6. A heat transfer system selected from the group consisting of a refrigeration system, an air-conditioning, a heating and a chilling containing the heat transfer composition of claim 1.

7. The heat transfer composition of claim 1 further comprising a lubricant.

8. The heat transfer composition of claim 7 where the lubricant is selected from polyol ester oils, polyglycols, polyalkylene glycols, polyvinyl ethers, mineral oils, alkyl benzene oils, polyalpha olefins, and mixtures thereof.

9. The heat transfer composition of claim 7 where the lubricant is selected from polyol ester oils, mineral oils, alkyl benzene oils, and mixtures thereof.

## Patentansprüche

1. Wärmeübertragungszusammensetzung, bestehend aus Difluormethan, Pentafluorethan, 1,1,2,2-Tetrafluorethan und 1,3,3,3-Tetrafluorpropen.

2. Wärmeübertragungszusammensetzung nach Anspruch 1, bestehend aus 1 bis 97 % Difluormethan, 1 bis 97 % Pentafluorethan, 1 bis 97 % 1,3,3,3-Tetrafluorpropen und 1 bis 97 % 1,1,2,2-Tetrafluorethan, bezogen auf das Gewicht.

3. Wärmeübertragungszusammensetzung nach Anspruch 1, bestehend aus 5 bis 40 % Difluormethan, 5 bis 40 % Pentafluorethan, 10 bis 60 % 1,3,3,3-Tetrafluorpropen und 5 bis 60 % 1,1,2,2-Tetrafluorethan, bezogen auf das Gewicht.

4. Wärmeübertragungszusammensetzung nach Anspruch 1, bestehend aus 15 bis 35 % Difluormethan, 15 bis 35 % Pentafluorethan, etwa 10 bis 35 % 1,3,3,3-Tetrafluorpropen und etwa 10 bis 35 % 1,1,2,2-Tetrafluorethan, bezogen auf das Gewicht.

5. Wärmeübertragungszusammensetzung nach Anspruch 1, wobei es sich bei dem 1,3,3,3-Tetrafluorpropen um das trans-Isomer handelt.

6. Wärmeübertragungssystem, ausgewählt aus der Gruppe bestehend aus einem Kälteerzeugungssystem, einer Klimaanlage, einer Heizung und einer Kühlung, enthaltend die Wärmeübertragungszusammensetzung nach Anspruch 1.

7. Wärmeübertragungszusammensetzung nach Anspruch 1, die ferner ein Schmiermittel umfasst.

8. Wärmeübertragungszusammensetzung nach Anspruch 7, wobei das Schmiermittel aus Polyolesterölen, Polyglykolen, Polyalkylenglykolen, Polyvinylethern, Mineralölen, Alkylbenzolölen, Poly-alpha-olefinen und Mischungen davon ausgewählt ist.

9. Wärmeübertragungszusammensetzung nach Anspruch 7, wobei das Schmiermittel aus Polyolesterölen, Mineralölen, Alkylbenzolölen und Mischungen davon ausgewählt ist.

## Revendications

1. Composition de transfert de chaleur constituée de difluorométhane, de pentafluoroéthane, de 1,1,2,2-tétrafluoroéthane, et de 1,3,3,3-tétrafluoropropène.

2. Composition de transfert de chaleur selon la revendication 1, constituée de 1 % à 97 % de difluorométhane, de 1 % à 97 % de pentafluoroéthane, de 1 % à 97 % de 1,3,3,3-tétrafluoropropène, et de 1 % à 97 % de 1,1,2,2-tétrafluoroéthane sur une base pondérale.

3. Composition de transfert de chaleur selon la revendication 1, constituée de 5 % à 40 % de difluorométhane, de 5 % à 40 % de pentafluoroéthane, de 10 % à 60 % de 1,3,3,3-tétrafluoropropène, et de 5 % à 60 % de 1,1,2,2-tétrafluoroéthane sur une base pondérale.

4. Composition de transfert de chaleur selon la revendication 1, constituée de 15 % à 35 % de difluorométhane, de 15 % à 35 % de pentafluoroéthane, d'environ 10 % à 35 % de 1,3,3,3-tétrafluoropropène, et d'environ 10 % à 35 % de 1,1,2,2-tétrafluoroéthane sur une base pondérale.

5. Composition de transfert de chaleur selon la revendication 1, dans laquelle ledit 1,3,3,3-tétrafluoropropène est l'isomère trans.

6. Système de transfert de chaleur choisi dans le groupe constitué par un système de réfrigération, une climatisation, un chauffage et un refroidisseur contenant la composition de transfert de chaleur selon la revendication 1.

7. Composition de transfert de chaleur selon la revendication 1 comprenant en outre un lubrifiant.

8. Composition de transfert de chaleur selon la revendication 7 dans laquelle le lubrifiant est choisi parmi des huiles d'ester de polyol, des polyglycols, des polyalkylèneglycols, des polyvinyléthers, des huiles minérales, des huiles d'alkylbenzène, des poly(alpha-oléfines), et des mélanges correspondants.

9. Composition de transfert de chaleur selon la revendication 7 dans laquelle le lubrifiant est choisi parmi des huiles d'ester de polyol, des huiles minérales, des huiles d'alkylbenzène, et des mélanges correspondants.
